# EUROPEAN PATENT APPLICATION

(11) **EP 2 700 546 A1**
(43) Date of publication of application: **26.02.2014**
(21) Application number: 12180998.2
(22) Date of filing: 20.08.2012
(51) Int. Cl.: B60R 25/10, G08B 25/00

(54) **Method and system for surveilling a vehicle**

(71) Applicant: Perovic, Zoran, 1230 Domzale (SI); Trifunovic, Dorde, 1215 Medvode (SI); Kriznar, Ales, 1230 Domzale (SI)
(72) Inventor: Perovic, Zoran, 1230 Domzale (SI); Trifunovic, Dorde, 1215 Medvode (SI); Kriznar, Ales, 1230 Domzale (SI)
(74) Representative: Lucke, Andreas

(57) **Abstract**

As a means to protect a vehicle against theft, the position of the vehicle in an allocated space is monitored by means of a sensor means in response to a locking request received from a user. An alert signal is output if the allocated space is determined un-occupied before an unlocking request is received from the user. The locking request may comprise an identification of the allocated space.

## Description

### Field of the Invention

The invention relates to methods and systems for the theft protection of vehicles, in particular to methods and systems for detecting and monitoring the presence of a vehicle in an allocated space.

### Background

Theft of vehicles is a growing concern in many parts of the world. Some vehicles are equipped with anti-theft protection or theft deterrent systems, such as unlock inhibit systems or immobilizer systems. However, vehicle owners have made the sad experience that thieves respond to every progress in anti-theft equipment with clever ideas how these systems may be surmounted or broken into. Some car owners do not trust anti-theft protection and are hesitant to leave their car for an extended period in a private or public car park, the more so since the owners of many parking structures have laid off much of their security personnel in an attempt to save costs.

What is needed is a method and system to inhibit or prevent the theft of vehicles from parking structures or other allocated spaces.

### Overview of the Invention

This objective is achieved by a method and system for surveilling a vehicle according to independent claims 1 and 10, respectively, as well as by a method and system for requesting surveillance of a vehicle according to independent claims 7 and 15, respectively. The dependent claims relate to preferred embodiments.

In a first aspect, the invention relates to a method for surveilling a vehicle, comprising the steps of detecting a presence of a vehicle in an allocated space; receiving, from a user, a locking request associated with said user and/or said allocated space; responsive to said locking request, monitoring said presence of said vehicle in said allocated space; and outputting an alert signal if said allocated space is determined un-occupied before an unlocking request is received from said user.

The method according to the invention allows to detect and monitor the presence of the vehicle in the allocated space responsive to the locking request received from the user. The presence of said vehicle in said allocated space may be monitored by means of a sensor means, such as an optical, magnetic or capacitive sensor means. The vehicle may be monitored until an unlocking request is received from said user. If the vehicle is removed from the allocated space before the unlocking request is received, this may be considered an unauthorized movement or attempted theft, and an alert signal is output. The alert signal may notify the user that his vehicle has been removed from the allocated space, or may also notify security personnel at the parking structure. The invention hence provides additional security against theft or unauthorized movement of the vehicle, beyond the vehicle's own anti-theft equipment.

The invention is useful for monitoring all kinds of vehicles, comprising cars, motorcycles, trucks, buses, and construction machinery. In the sense of the present invention, the term "vehicle" may be understood to comprise any movable object that may be at risk of being stolen.

An "allocated space" in the sense of the present invention may be any space or location where a vehicle may be parked temporarily or permanently. In particular, an allocated space may be understood to denote a space equipped with sensor means that are adapted to determine whether or not the allocated space is occupied. An allocated space may be a layby in a public or a private car park, but may also be a designated space in a user's driveway or private garage.

The user may park his vehicle in the allocated space, and may then send a locking request to activate the surveillance of the vehicle in the allocated space. A locking request may denote any request or signal suitable to activate the surveillance. The locking request may comprise an identification of said user and/or said allocated space. For instance, the user may employ his mobile phone to send the locking request and to activate the surveillance. The presence of the vehicle in the allocated space is then monitored until a corresponding unlocking request is received from the user. In the context of the present invention, an unlocking request may be any request or signal suitable to de-active the surveillance of the vehicle.

In case the allocated space is a space designated for that particular vehicle or user, such as a private parking space, it may be sufficient that the locking request identifies the user or vehicle. Association with the allocated space and sensor means may be implicit from the user or vehicle information.

In a public car park, there may be several allocated spaces, each one equipped with their own sensor means, and the user may in addition provide an indication or identification of the allocated space where he parked his vehicle so to make sure that the right vehicle is monitored.

In a preferred embodiment, said locking request hence comprises an identification of said allocated space.

Said identification may be any information that allows to uniquely identify the allocated space. For instance, said identification may comprise an alpha-numeric identifier of said allocated space, as it is commonly employed to number parking spaces in a public car park.

Alternatively, the allocated space may be provided with an identification tag comprising a graphical identifier of the allocated space, such as a two-dimensional barcode or matrix code or QR-code. The user may employ his mobile phone or portable computer to scan or capture the identification tag, and may provide the captured identification of the allocated space to the server system together with the locking request.

The identification tag associated with the allocated space may also be adapted to broadcast an electromagnetic signal identifying the allocated space, such as a Bluetooth signal. The user may again employ his mobile phone or portable computer to receive the signal, and may provide the identification to the server system together with the locking request.

In a preferred embodiment, the method further comprises the step of receiving an unlocking request from said user, and quitting said monitoring of said vehicle responsive to receiving said unlocking request.

The method may comprise a step of verifying that said unlocking request is received from the same user or same user device that sent the locking request prior to quitting said monitoring of said vehicle.

Said locking request and/or said unlocking request may be received from a portable device of said user, in particular from said user's mobile phone or portable computer. The portable device hence serves as a kind of key to lock or unlock the vehicle.

In a preferred embodiment, the method further comprises the steps of verifying an identity of said user before monitoring said vehicle and/or before quitting said monitoring of said vehicle.

Verifying an identity of said user may prevent misuse of the system. Verifying the identity of said user both when receiving the locking request and when receiving the unlocking request allows to make sure that only a verified and trustworthy user may lock and unlock the vehicle, and that the unlocking request comes from the same user that requested the locking.

Verifying an identity of said user may comprise a step of requesting said user to provide proof of his identity.

Use of the system may be limited to users that previously registered with the server system or a central service provider. A user may be requested to provide proof of registration when submitting the locking request and/or unlocking request, such as an identification code or password.

In some embodiments, verifying the phone number or an ID number provided by the user's portable device may be considered sufficient to verify the identity of said user.

In a preferred embodiment, said alert signal comprises an acoustic or optical signal. This may be an appropriate means to deter potential thieves and to alert security personnel of an unauthorized movement of the vehicle.

Said alert signal may also comprise an alert message sent to said user, in particular sent to a portable device of said user, such as a mobile phone or a portable computer. The user may then decide to check the presence of the vehicle, or to inform the authorities of a theft.

Alternatively or additionally, said alert signal may comprise an alert message sent to a third party controlling physical access to said allocated space.

For instance, an alert message may be sent to the security personnel at the parking structure where the vehicle is parked, and may trigger a closing of the gates of the parking structure so to prevent removal of the stolen vehicle from the parking structure.

In a preferred embodiment, the method further comprises a step of sending a backup code to said user responsive to receiving said locking request, or upon request from the user. The method may further comprise the steps of receiving an unlocking request comprising said backup code from said user, and quitting monitoring of said presence of said vehicle responsive to the user returning the backup code.

The backup code may provide a fallback solution for unlocking the vehicle in case the portable device used to send the locking request is lost or stolen.

The backup code may be sent to the user out-of-session via a separate channel, such as by e-mail to a previously designated e-mail account.

In a preferred embodiment, said locking request from said user is accepted only within a predetermined time span after detecting said presence of said vehicle in said allocated space. In other words, locking of said vehicle in said allocated space according to the invention may only be allowed if the locking request is received within a predetermined time span after movement of said vehicle into said allocated space has been detected. Said predetermined time span may amount to 30 seconds or 1 minute, but longer or shorter time periods may also be selected.

By allowing the locking request only within said predetermined time span, malfunction and misuse of the system may be prevented. In particular, the predetermined time span provides an efficient means to prevent users from intentionally or unintentionally locking other peoples' vehicles.

In a preferred embodiment, said method may comprise the step of providing to said user geographical directions or indications associated with the location of said allocated space.

The geographical indications may be sent to the user prior to parking and may help the user find free parking spaces. The geographical indications may also be sent to the user after receiving the locking request, or later upon request by the user and may assist the user in retrieving his vehicle.

The invention not only relates to the method for surveilling a vehicle, which will typically be performed by the server system or operator of a parking structure or car park, but also to a corresponding method for requesting surveillance of a vehicle in the allocated space, which will typically be performed by a user of the car park.

In a second aspect, the invention hence relates to a method for requesting surveillance of a vehicle in an allocated space, comprising the steps of sending a locking request to a processing unit, said locking request associated with a user and/or with said allocated space, thereby causing said processing unit to monitor a presence of said vehicle in said allocated space, preferably by means of a sensor means connected to said processing unit, and causing said processing unit to output an alert signal if said allocated space is determined un-occupied before an unlocking request is received from said user.

In a preferred embodiment, the method further comprises a step of providing to said processing unit an identification of said allocated space.

Preferably, said step of providing to said processing unit an identification of said allocated space may comprise a step of capturing an image of an identification tag associated with said allocated space.

Alternatively or additionally, said step of providing to said processing unit an identification of said allocated space may comprise the steps of receiving a signal from an identification tag associated with said allocated space, said signal comprising an identification of said allocated space, and forwarding said identification to said processing unit.

In a preferred embodiment, said locking request is sent from a portable device of said user, in particular from said user's mobile phone or portable computer.

The method may further comprise a step of providing to said processing unit an identification of said user or portable device.

In a preferred embodiment, the method may comprise a step of sending an unlocking request to said processing unit, thereby causing said processing unit to quit said monitoring of said vehicle.

Preferably, the method comprises a step of receiving an alert signal if said allocated space is determined unoccupied before an unlocking request is received from said user.

In a preferred embodiment, the method may further comprise a step of receiving, from said processing unit, geographical directions associated with a location of said allocated space.

In the first aspect, the invention further relates to a system for surveilling a vehicle, comprising a sensor means for detecting and monitoring an occupancy of an allocated space for a vehicle, and a processing unit, wherein said processing unit is connected to said sensor means and is adapted to receive an occupancy signal from said sensor means indicating whether said allocated space is occupied, and wherein said processing unit is further adapted to receive a locking request from a user, said locking request associated with said user and/or with said allocated space, and to monitor said occupancy of said allocated space in response to said locking request, and to output an alert signal if said allocated space is determined un-occupied before an unlocking request is received from said user.

In a preferred embodiment, the system further comprises an identification tag associated with said allocated space. Said locking request may comprise a representation of said identification tag associated with said allocated space.

Preferably, said identification tag comprises an alpha-numeric identifier of said allocated space.

Additionally or alternatively, said identification tag may also comprise a graphical or scannable identifier of said allocated space.

Additionally or alternatively, said identification tag may be adapted to broadcast a signal identifying said allocated space, such as a near field communication signal or a Bluetooth signal.

In a preferred embodiment, said processing unit may be further adapted to receive said unlocking request from said user, and to quit said monitoring of said vehicle responsive to receiving said unlocking request.

In a preferred embodiment, said processing unit may be adapted to verify an identity of said user before monitoring said presence of said vehicle and/or before quitting said monitoring of said vehicle.

Said sensor means may comprise an optical sensor unit and/or a magnetic sensor unit and/or a capacitive sensor unit.

By employing an optical or a magnetic or a capacitive sensor unit, the presence of the vehicle in the allocated space may be reliably detected. However, the invention is not so limited, and any other means for detecting the presence of the vehicle in the allocated space may likewise be employed.

In a preferred embodiment, the system further comprises a timer unit, wherein said processing unit is coupled to said timer unit and is adapted to accept said locking request from said user only within a predetermined time span from detecting said occupancy of said allocated space.

In the second aspect, the invention also relates to a system for requesting surveillance of the vehicle in an allocated space, said system comprising means for sending a locking request to a processing unit, said locking request associated with a user and/or with said allocated space, thereby causing said processing unit to monitor a presence of said vehicle in said allocated space, preferably by means of a sensor means connected to said processing unit, and to output an alert signal if said allocated space is determined un-occupied before an unlocking request is received from said user.

In a preferred embodiment, the system may be adapted to capture an image of an identification tag associated with said allocated space.

The system may alternatively or additionally be adapted to receive a signal from an identification tag associated with said allocated space, said signal comprising an identification of said allocated space.

In a preferred embodiment, said system is further adapted to provide to said processing unit an identification of said allocated space.

Said identification may comprise a captured or scanned representation of an identification tag associated with said allocated space.

Said system may be embodied, such as by hardware or by software, in a portable device of said user, in particular in a mobile phone or in a portable computer.

Said system may be adapted to provide to said processing unit an identification of said user or portable device.

In a preferred embodiment, said system is further adapted to send an unlocking request to said processing unit, thereby causing said processing unit to quit said monitoring of said vehicle.

Said system may be further adapted to receive an alert signal if said allocated space is determined unoccupied before an unlocking request is received from said user.

In a preferred embodiment, said system is further adapted to receive, from said processing unit, geographical directions associated with a location of said allocated space.

### Detailed Description of Preferred Embodiments

The features and numerous advantages of the methods and systems according to the present invention will best be understood from a detailed description of preferred embodiments with reference to the accompanying drawings, in which:
- Fig. 1: is a conceptual drawing of the components of a system for surveilling a vehicle according to an embodiment of the present invention; and
- Fig. 2: is a flow diagram illustrating a method for surveilling a vehicle according to an embodiment of the present invention.

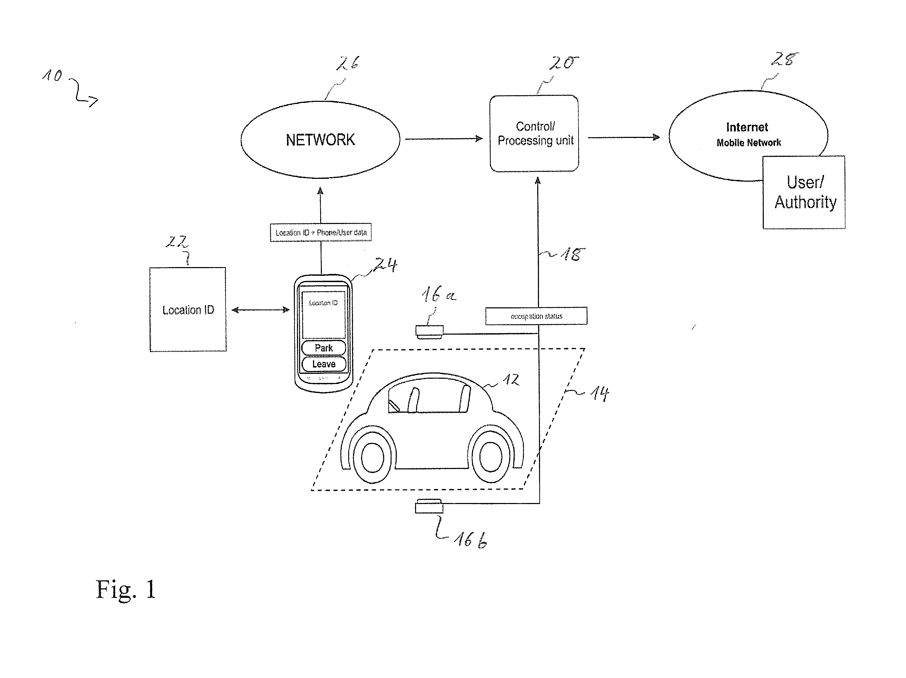

Fig. 1 shows the components of a system 10 for surveilling a vehicle such as a car 12 according to an embodiment of the present invention. The system 10 may be provided in a public car park as a means to secure and protect the car 12 against theft. However, corresponding systems may also be employed to secure the car 12 in a private car park or driveway, or to secure other kinds of vehicles such as motorcycles or construction machinery, or any other movable objects that may be at the risk of theft from an allocated space.

The car park is provided with a plurality of parking spaces 14 or laybys, wherein each parking space 14 may be adapted to hold one vehicle 12. The parking spaces 14 serve as allocated spaces in the sense of the present invention.

As can be taken from the conceptual drawing of Fig. 1, each of the parking spaces 14 is provided with a pair of sensor means 16a, 16b, which are adapted to detect whether a vehicle 12 occupies the parking space 14, or whether the parking space 14 is empty. Many existing parking structures are already equipped with sensor means 16a, 16b such as those shown in Fig. 1 so to detect and to indicate to the customers which parking spaces 14 are empty and which are occupied. Conventionally, the sensor means 16a, 16b may be coupled to light little indicator lamps showing a green light for an empty parking space and a red light for an occupied parking space. Those parking structures can easily be upgraded to implement a surveillance of the vehicle 12 parked in the parking space 14 according to the present invention.

The sensor means 16a, 16b may be optical sensor means that detect an interruption of a light beam sent from a first sensor 16a to a second sensor 16b when a vehicle 12 is parked in the parking space 14. However, any other sensor means capable of detecting the presence of the vehicle 12 in the parking space 14 may likewise be employed, such as magnetic or capacitive sensors.

The sensor means 16a, 16b are connected via a sensor channel 18 to a control or processing unit 20, which may form part of a server system (not shown) of the parking structure, or may also be provided externally. Via the sensor channel 18, the processing unit 20 may determine whether the parking space 14 is occupied or not.

Each parking space 14 is further equipped with an identification tag 22 that comprises a unique representation of (the location of) the parking space 14. In the example illustrated in Fig. 1, the identification tag 22 may be a two-dimensional barcode (or matrix code or QR code), which may comprise or encode the number of the parking space 14 to which it is associated. However, the identification tag 22 may also simply comprise an alpha-numeric identifier of the parking space 14, such as a four-digits number as it is conventionally employed in many public car parks to consecutively number the parking spaces 14. The identification tag 22 allows the user to associate a request for surveilling the vehicle 12 with the corresponding parking space 14, as will now be explained in further detail.

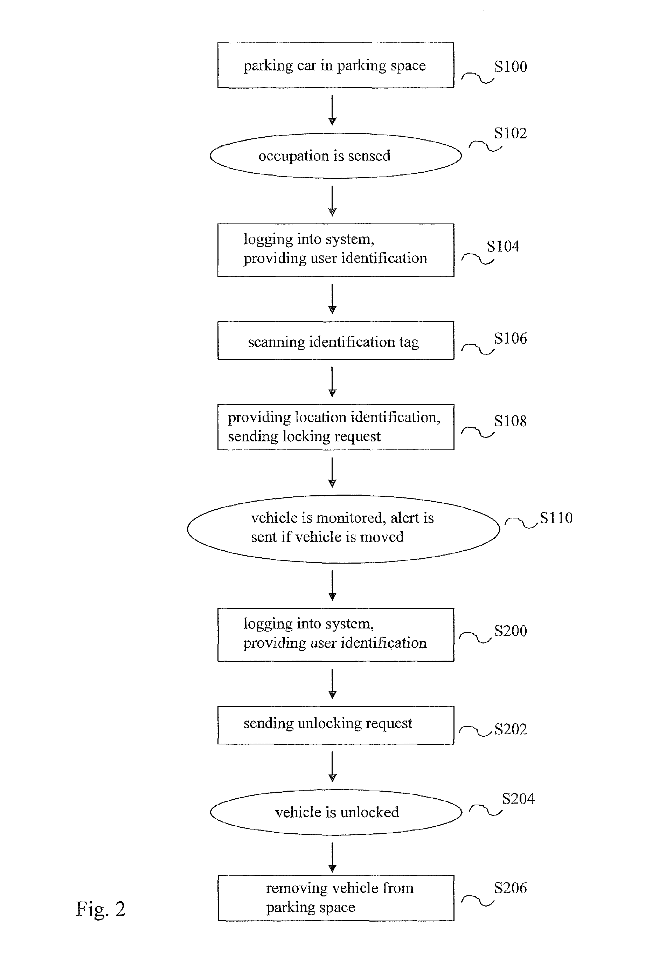

With reference to the conceptual drawing of Fig. 1 and the flow diagram of Fig. 2, assume that a user parks his car 12 in the parking space 14 of a public car park (step S100) and would like to have his car 12 surveyed or monitored as a means to protect it against theft, such as while the user is shopping or while the user spends the night at a hotel nearby. Once the car 12 is moved into the parking space 14, the sensor means 16a, 16b detect the presence of the car 12 and send an occupancy signal to the processing unit 20 via the sensor channel 18 (S102).

The user may employ his internet-enabled mobile phone 24 to log into the processing unit 20 via the wireless network 26. Logging into the server system 20 may require the user to provide proof of his identity, such as a user name and/or password (S104). The processing unit 20 may verify the user's identification and compare it to registration data of the user before allowing access to the system. Alternatively, the processing unit 20 may identify the user by means of a phone number or identification number that the user's mobile phone 24 transmits when accessing the processing unit 20 via the wireless network 26.

Once the user has successfully logged into the system, the user may employ the optical camera of his mobile phone 24 to capture an image of the QR code of the identification tag 22(106). The captured image may be provided to the processing unit 20 via the wireless network 26 for analysis and identification of the parking space 14 to which the identification tag 22 is associated (S108). Alternatively, the mobile phone 24 may be adapted to analyze and read out the QR code, and may identify the allocated space 14 to which the QR code is associated. This information may then be provided as identification information or location information to the processing unit 20 via the wireless network 26.

Together with to the location information, the user sends a locking request to the processing unit 20 via the wireless network 26 (S108). A locking request, in the sense of the present invention, may be understood to be a request from a user requesting the monitoring of the presence of the vehicle 12 in the allocated space 14. The occupancy signal received from the sensor means 16a, 16b, the user identification and the location information received from the user via the mobile phone 24 and network 26 allow the processing unit 20 to uniquely associate the occupied parking space 14 to the user and to lock the car 12 parked in that particular parking space 14 on behalf of that particular user.

The processing unit 20 may be equipped with a timer and may accept the locking request only if it is received within a predetermined time span, such as one or two minutes after the sensor means 16a, 16b have detected that the vehicle 12 has been moved into the corresponding parking space 14. Providing a timer helps, to prevent unintentional or intentional misuse of the system, such as a user scanning the wrong identification tag 22, e. g., an identification tag corresponding to a neighboring parking space that is empty or has been occupied a long time ago, or a user trying to lock another user's vehicle.

Once the processing unit 20 has received the locking request within the predetermined time span, a confirmation is sent to the user's mobile phone 24 via the wireless network 26, confirming that the vehicle 12 will be monitored. The processing unit 20 now continually monitors the presence of the car 12 in the parking space 14 by analyzing the occupation signal provided by the sensor means 16a, 16b via the sensor channel 18 (S110). The processing unit 20 may request the occupation status at predetermined time intervals, such as every five seconds or every ten seconds.

Once the user returns to his vehicle 12, he may use his mobile phone 24 to log into the processing unit 20 via the wireless network 26 (S200). This may again require him to provide his user identification, and may optionally again require him to capture an image of the identification tag 22 with his mobile phone 24 and to provide it to the processing unit 20 via the wireless network 26, as described above. The user may then employ his mobile phone 24 to send an unlocking request to the processing unit 20 via the wireless network 26 (S202). In the sense of the present invention, an unlocking request is any request requesting the processing unit 20 to quit the monitoring of the vehicle 12 in the allocated space 14.

The processing unit 20 will confirm to the user via the wireless network 26 and the user's mobile phone 24 that the surveillance of the vehicle 12 has been stopped (S204), and the user may then remove his vehicle 12 from the parking space 14 without triggering an alarm or alert (206).

Hence, the user's mobile phone 24 or other portable device serves as a kind of key to lock his vehicle 12 to the parking space 14, and to unlock his vehicle 12 from the parking space 14. This provides additional protection against theft, beyond the existing anti-theft equipment of the vehicle.

Assume now that a non-authorized person, such as a thief, removes the car 12 from the parking space 14 while the car 12 is under surveillance, i. e., before the processing unit 20 receives an unlocked request. The processing unit 20 will then receive a signal from the sensor means 16a, 16b indicating that the parking space 14 is empty, and will in response output an alert signal. The alert signal may be an optical or acoustic signal, but may also be a message sent to the user's mobile phone 24 via the wireless network 26, indicating that the car 12 has been removed from the parking space 14.

Alternatively, or additionally, the processing unit 20 may send an alert message via a data network 28 to the security personnel at the car park and/or to the police. Responsive to this alert message, the gates of the parking structure may be automatically closed so to prevent the thief from leaving the parking structure with the stolen vehicle.

In the event that the legitimate user himself has removed the vehicle 12 from the parking space 14 without deactivating the surveillance, or would like to authorize movement of the vehicle 12, upon receiving the alert message the user may still employ his mobile phone 24 to log into the processing unit 20 via the wireless network 26 and request an unlocking. The acoustic or optical alert signal may then be deactivated. At the same time, the security personnel at the car park may be informed that a false alarm has occurred.

Upon receiving the locking request, the processing unit 20 may additionally send to the user a backup code via an out-of-session channel, such as via an e-mail to the user's pre-registered e-mail account. This backup code may allow a user to de-activate the surveillance of the vehicle 12 if the mobile phone 24 is lost or stolen, or runs out of battery. In order to deactivate the surveillance, the user may log onto the processing unit 20 via a data network 28 such as the internet, and may provide his identification and the backup code. Upon receiving the user identification and the backup code, the processing unit 20 will quit the surveillance of the vehicle 12, and the user may remove the vehicle 12 from the parking space 14 without triggering an alarm.

The parking space administration may also have access to the processing unit 20 and may unlock the vehicle 12.

In addition, upon receiving the locking request the processing unit 20 may send to the user geographical indications associated with the location of the parking space 14. This information may later help the user to retrieve his vehicle. The geographical directions may also be provided to the user upon request.

The description of the preferred embodiments and the Figures merely serve to illustrate the invention and the beneficial effects associated therewith, but should not be understood to imply any limitation. The scope of the invention is to be determined solely by the appended claims.

### Reference Signs

- 10: system for surveilling a vehicle 12
- 12: vehicle, car
- 14: parking space
- 16a, 16b: sensor means
- 18: sensor channel
- 20: processing unit
- 22: identification tag
- 24: user's mobile phone
- 26: wireless network
- 28: data network

## Claims

1. A method for surveilling a vehicle (12), comprising the steps of:
detecting a presence of a vehicle (12) in an allocated space (14);
receiving, from a user, a locking request associated with said user and/or said allocated space (14);
responsive to said locking request, monitoring said presence of said vehicle (12) in said allocated space (14); and
outputting an alert signal if said allocated space (14) is determined un-occupied before an unlocking request is received from said user.

2. The method according to claim 1, wherein said locking request comprises an identification of said allocated space (14).

3. The method according to any of the preceding claims, further comprising the steps of receiving said unlocking request from said user, and quitting said monitoring of said vehicle (12) responsive to receiving said unlocking request.

4. The method according to any of the preceding claims, wherein said locking request and/or said unlocking request are received from a portable device of said user, in particular from said user's mobile phone (24) or portable computer.

5. The method according to any of the preceding claims, further comprising the steps of verifying an identity of said user before monitoring said presence of said vehicle (12) and/or before quitting said monitoring of said vehicle (12).

6. The method according to any of the preceding claims, wherein said alert signal comprises an alert message sent to said user, in particular sent to a portable device of said user, such as a mobile phone (24) or a portable computer.

7. A method for requesting surveillance of a vehicle (12) in an allocated space (14), comprising the steps of:
sending a locking request to a processing unit (20), said locking request associated with a user and/or with said allocated space (14), thereby causing said processing unit (20) to monitor a presence of said vehicle (12) in said allocated space (14) by means of a sensor means (16a, 16b) connected to said processing unit (20), and to output an alert signal if said allocated space (14) is determined un-occupied before an unlocking request is received from said user.

8. The method according to claim 7, further comprising a step of providing to said processing unit (20) an identification of said allocated space (14).

9. The method according to claim 7 or 8, further comprising a step of sending an unlocking request to said processing unit (20), thereby causing said processing unit (20) to quit said monitoring of said vehicle (12).

10. A system (10) for surveilling a vehicle (12), comprising:
a sensor means (16a, 16b) for detecting and monitoring an occupancy of an allocated space (14) for a vehicle (12); and
a processing unit (20);
wherein said processing unit (20) is connected to said sensor means (16a, 16b) and is adapted to receive an occupancy signal from said sensor means (16a, 16b) indicating whether said allocated space (14) is occupied; and
wherein said processing unit (20) is further adapted to receive a locking request from a user, said locking request associated with said user and/or with said allocated space (14), and to monitor said occupancy of said allocated space (14) in response to said locking request, and to output an alert signal if said allocated space (14) is determined un-occupied before an unlocking request is received from said user.

11. The system (10) according to claim 10, further comprising an identification tag (22) associated with said allocated space (14), wherein said locking request comprises a representation of said identification tag (22) associated with said allocated space (14).

12. The system (10) according to claim 1 l, wherein said identification tag (22) comprises an alpha-numeric identifier of said allocated space (14) and/or a graphical or scannable identifier of said allocated space (14) and/or wherein said identification tag (22) is adapted to broadcast a signal identifying said allocated space (14).

13. The system (10) according to any of the claims 10 to 12, wherein said processing unit (20) is adapted to receive said unlocking request from said user, and to quit said monitoring of said vehicle (12) responsive to receiving said unlocking request.

14. The system (10) according to any of the claims 10 to 13, further comprising a timer unit, wherein said processing unit (20) is coupled to said timer unit and is adapted to accept said locking request from said user only within a predetermined time span from detecting said occupancy of said allocated space (14).

15. A system (24) for requesting surveillance of a vehicle (12) in an allocated space (14), said system (24) comprising means for sending a locking request to a processing unit (20), said locking request associated with a user and/or with said allocated space (14), thereby causing said processing unit (20) to monitor a presence of said vehicle (12) in said allocated space (14) by means of a sensor means (16a, 16b) connected to said processing unit (20), and to output an alert signal if said allocated space (14) is determined un-occupied before an unlocking request is received from said user.
